# EUROPEAN PATENT APPLICATION

(11) **EP 4 786 643 A1**
(43) Date of publication of application: **05.08.2026**
(21) Application number: 24872398.3
(22) Date of filing: 26.09.2024
(51) Int. Cl.: C23C 26/00, B32B 15/08, B32B 27/16, H01F 1/147, H01F 27/245, H02K 1/18

(54) **ELECTROMAGNETIC STEEL SHEET HAVING ADHESIVE COATING, LAMINATED CORE, AND METHOD FOR MANUFACTURING SAME**

(30) Priority: 26.09.2023 JP 2023163605
(71) Applicant: Nippon Steel Corporation, Tokyo 100-8071 (JP)
(72) Inventor: TAKEDA, Kazutoshi, Tokyo 100-8071 (JP); FUKUCHI, Minako, Tokyo 100-8071 (JP); TAKATANI, Shinsuke, Tokyo 100-8071 (JP)
(74) Representative: Vossius & Partner Patentanwälte Rechtsanwälte mbB
(86) International application number: PCT/JP2024/034436
(87) International publication number: WO 2025/070613

(57) **Abstract**

This adhesive surface-coated electrical steel sheet includes an electrical steel sheet; and an adhesive coating provided on at least a part of one surface or both surfaces of the electrical steel sheet, wherein the adhesive coating contains: a crosslinkable thermoplastic resin A and a thermoplastic resin B other than the crosslinkable thermoplastic resin A, and has a vibrational elastic modulus at room temperature of 130 to 200 GPa, and the vibrational elastic modulus at 100°C of 100 to 200 GPa.

## Description

### TECHNICAL FIELD

The present disclosure relates to an adhesive surface-coated electrical steel sheet and a laminated core, and a method for manufacturing the same.

The present application claims priority based on Japanese Patent Application No. 2023-163605 filed in Japan on September 26, 2023, the contents of which are incorporated herein by reference.

### BACKGROUND ART

Conventionally, as a core (that is, core) used in a rotary electric machine or the like, a "laminated core" in which a plurality of electrical steel sheets are stacked on each other is known. The plurality of electrical steel sheet is fixed by methods such as welding, fastening, bolting, and bonding.

However, in fixing the plurality of electrical steel sheets by the welding, fastening, or bolting method, mechanical stress, thermal stress, interlayer short circuit, and the like are likely to occur during processing. Therefore, the magnetic properties of the electrical steel sheet are deteriorated, and it is difficult to sufficiently exhibit the performance of the laminated core.

On the other hand, in fixing the plurality of electrical steel sheets by the bonding method, using an adhesive surface-coated electrical steel sheet, the adhesive coating is cured by heating and pressurization to exhibit adhesive ability, whereby the plurality of electrical steel sheets are bonded to each other.

In fixing the plurality of electrical steel sheets using an adhesive surface-coated electrical steel sheet, mechanical stress, thermal stress, interlayer short circuit, and the like are less likely to occur during processing. Therefore, the magnetic properties of the electrical steel sheet are hardly deteriorated, and the performance of the laminated core is easily exhibited sufficiently.

From such an advantageous point, various techniques have been studied for fixing the plurality of electrical steel sheets by the bonding method.

For example, Patent Document 1 discloses "a surface-coated electrical steel sheet for bonding, the electrical steel sheet having an insulating coating that exhibits adhesive ability by heating and/or pressurization on a surface thereof, wherein the coating is a mixture in which an epoxy resin or an epoxy resin modified product having a glass transition point (Tg) of 80°C to 150°C, an epoxy resin hardener, and a particulate polymer having a grain size of 0.01 µm to 0.5 µm are dispersed".

Also, Patent Document 2 discloses "an electrical steel sheet laminate including: a plurality of electrical steel sheets; and a fusion layer placed between the plurality of electrical steel sheets, wherein the fusion layer includes a polyethylene acrylate including a repeating unit represented by the following Chemical Formula 1 and a repeating unit represented by the following Chemical Formula 2, and the polyethylene acrylate includes 65 to 90 wt % of the repeating unit represented by the following Chemical Formula 1 and 10 to 35 wt % of the repeating unit represented by the following Chemical Formula 2".

In addition, Patent Document 3 discloses "an electrical steel sheet for stacking, including: an electrical steel sheet; and a bond-type insulating coating formed on at least one surface of the electrical steel sheet and having Martens hardness HM of 50 or more and less than 500".

Further, Patent Document 4 discloses "an electrical steel strip or electrical steel sheet in which at least one thermosetting baked enamel layer containing an epoxy resin main component, at least one hardener, and at least one filler is provided on one of its flat sides, wherein the filler of the baked enamel layer contains a metal carbonate, metal sulfate, metal sulfide, metal silicate or metal phosphate, or any mixture of a plurality of these".

Furthermore, Patent Document 5 discloses "an insulation-coated electrical steel sheet having a heat-resistant adhesive insulating coating on one surface or both surfaces of the electrical steel sheet, wherein the heat-resistant adhesive insulating coating contains 10 mass% or more of a polycarbonate urethane resin having a softening point of 20 to 200°C and 10 to 1000 parts by mass of a phenol resin with respect to 100 parts by mass of the polycarbonate urethane resin".

### Citation List

### Patent Documents

Patent Document 1: PCT International Publication No. WO 2004/070080
Patent Document 2: Published Japanese Translation No. 2023-508140 of the PCT International Publication
Patent Document 3: PCT International Publication No. WO 2016/017132
Patent Document 4: Published Japanese Translation No. 2018-518591 of the PCT International Publication
Patent Document 5: Japanese Unexamined Patent Application, First Publication No. 2017-179233

### SUMMARY OF INVENTION

### Technical Problem

However, in the conventional techniques including Patent Documents 1 to 5, when the adhesive strength of the adhesive coating is increased, a phenomenon occurs in which the magnetic properties of the electrical steel sheet are deteriorated. Therefore, the adhesive strength of the adhesive coating and the magnetic properties of the electrical steel sheet are in a contradictory relationship, and it is difficult to achieve both. In particular, it is required to secure the adhesive strength of the adhesive surface-coated electrical steel sheet at room temperature and high temperature.

Therefore, in the adhesive surface-coated electrical steel sheet, it is desired to further improve the adhesive strength at room temperature and high temperature and the magnetic properties.

An object of the present disclosure is to provide an adhesive surface-coated electrical steel sheet which is excellent in both the adhesive strength at room temperature and high temperature and the magnetic properties, a laminated core using the same, and a method for manufacturing the same.

### Solution to Problem

Specific means for solving the problem include the following aspects.
[1] An adhesive surface-coated electrical steel sheet, including:
   an electrical steel sheet; and
   an adhesive coating provided on at least a part of one surface or both surfaces of the electrical steel sheet,
   wherein the adhesive coating
      contains a crosslinkable thermoplastic resin A and a thermoplastic resin B other than the crosslinkable thermoplastic resin A, and
      has a vibrational elastic modulus at room temperature of 130 to 200 GPa, and the vibrational elastic modulus at 100°C of 100 to 200 GPa.
[2] The adhesive surface-coated electrical steel sheet according to [1], wherein the crosslinkable thermoplastic resin A is one or more of a (meth)acrylic resin and a polyester resin.
[3] The adhesive surface-coated electrical steel sheet according to [1], wherein a mass ratio of the crosslinkable thermoplastic resin A to the thermoplastic resin B is 97/3 to 70/30.
[4] The adhesive surface-coated electrical steel sheet according to [1], wherein the adhesive coating is cured.
[5] A laminated core in which a plurality of the adhesive surface-coated electrical steel sheets according to any one of [1] to [4] are stacked and the electrical steel sheets are adhered to each other by a cured film of the adhesive coating.
[6] A method for manufacturing the adhesive surface-coated electrical steel sheet according to any one of [1] to [4], the method including:
   forming a coating film by applying a coating liquid containing particles of the crosslinkable thermoplastic resin A and the thermoplastic resin B other than the crosslinkable thermoplastic resin A and having a mass ratio of the crosslinkable thermoplastic resin A to the thermoplastic resin B of 97/3 to 70/30 to at least a part of one surface or both surfaces of the electrical steel sheet; and
   drying the coating film to form the adhesive coating.
[7] A method for manufacturing the laminated core according to [5], the method including:
   stacking the adhesive surface-coated electrical steel sheets with the adhesive coating interposed between the electrical steel sheets to form a laminated body; and
   curing the adhesive coating by heating and pressurizing the laminated body to form the cured film.

### Advantageous Effects of Invention

According to the present disclosure, it is possible to provide an adhesive surface-coated electrical steel sheet which is excellent in both the adhesive strength at room temperature and high temperature and the magnetic properties, a laminated core using the same, and a method for manufacturing the same.

### BRIEF DESCRIPTION OF DRAWINGS

[FIG. 1] A schematic view illustrating an example of an adhesive surface-coated electrical steel sheet of the present disclosure.
[FIG. 2] A schematic view illustrating an example of a laminated core of the present disclosure.

### DESCRIPTION OF EMBODIMENTS

Hereinafter, the present disclosure will be described.

While the description of the requirements described below will occasionally be made based on representative embodiments of the present disclosure, the present disclosure is not limited to such embodiments, and can be implemented with appropriate modifications within the scope of the object of the present disclosure.

In the present disclosure, a numerical range shown using "to" indicates a range that includes numerical values before and after "to" as a lower limit and an upper limit, respectively.

In numerical ranges in the present disclosure that are described in stages, an upper limit or a lower limit described in a numerical range may be replaced with an upper limit or a lower limit of another numerical range described in stages. In addition, in numerical ranges described in the present disclosure, an upper limit or a lower limit of a numerical range may be replaced with a value shown in examples.

In the present disclosure, a combination of two or more preferred aspects is a more preferred aspect.

In the present disclosure, "mass%" and "wt%" are synonymous, and "part(s) by mass" and "part(s) by weight" are synonymous.

### [Adhesive Surface-Coated Electrical Steel Sheet]

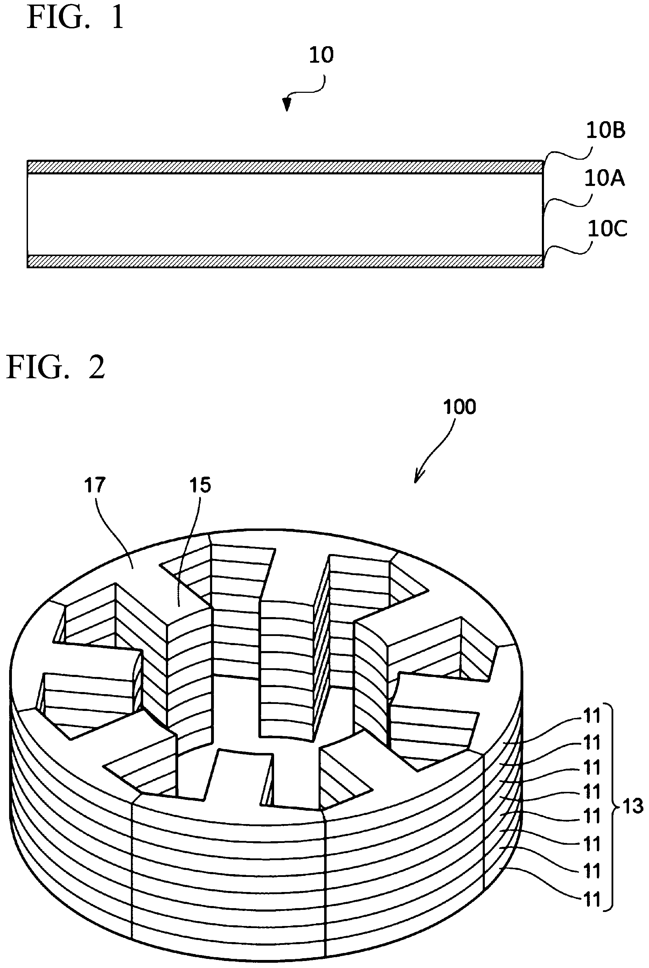

An adhesive surface-coated electrical steel sheet of the present disclosure includes an electrical steel sheet and an adhesive coating provided on at least a part of one surface or both surfaces of the electrical steel sheet (see FIG. 1).

The adhesive coating contains a crosslinkable thermoplastic resin A and a thermoplastic resin B other than the crosslinkable thermoplastic resin A.

Further, the adhesive coating has a vibrational elastic modulus at room temperature of 130 to 200 GPa, and the vibrational elastic modulus at 100°C of 100 to 200 GPa.

In FIG. 1, reference numeral 10 denotes an adhesive surface-coated electrical steel sheet, reference numeral 10A denotes an electrical steel sheet, and reference numerals 10B and 10C denote adhesive coatings.

With the above configuration, the adhesive surface-coated electrical steel sheet of the present disclosure is excellent in both the adhesive strength at room temperature and high temperature and the magnetic properties.

The reason is presumed as follows. When an electrical steel sheet is bonded with an adhesive coating to produce a laminated core, stress associated with volume shrinkage of an organic resin is applied to the electrical steel sheet. This stress deteriorates iron loss of the electrical steel sheet. However, the electrical steel sheet generates heat by driving the electric motor incorporating the laminated core, whereby the organic resin constituting the adhesive coating expands and softens, resulting in a reduction of the stress applied to the electrical steel sheet and an associated reduction (improvement) in iron loss.

Here, the stress applied to the electrical steel sheet is proportional to the Young's modulus of the organic resin. An organic resin whose Young's modulus decreases more significantly with increasing temperature can improve the magnetic properties of the laminated core. However, if the Young's modulus decreases excessively due to the temperature rise, the adhesive strength at high temperatures deteriorates. Therefore, the bonding force between the laminated electrical steel sheets is reduced, and vibration and noise may be generated. Furthermore, in a severe case, the positions of the steel sheets may deviate from each other, and a rotor may come into contact with a stator.

Therefore, by including a specific organic resin into the adhesive coating and defining the vibrational elastic modulus at room temperature and at 100°C, an appropriate stress can be applied to the laminated core, thereby achieving both improved magnetic properties and sufficient adhesive strength at both room temperature and high temperatures.

Hereinafter, the adhesive surface-coated electrical steel sheet of the present disclosure will be described in detail.

### (Electrical steel sheet)

The electrical steel sheet is a target steel sheet on which an adhesive coating is formed, and is not particularly limited.

The electrical steel sheet may be a non-oriented electrical steel sheet or a grain-oriented electrical steel sheet.

Specifically, as the electrical steel sheet, for example, a non-oriented electrical steel strip of JIS C 2552:2014, an oriented electrical steel strip of JIS C 2553:2019, a non-oriented thin electrical steel strip or grain-oriented thin electrical steel strip of JIS C 2558:2021, cut to a predetermined length can be employed.

### (Adhesive coating)

The adhesive coating is provided on at least a part of one surface or both surfaces of the electrical steel sheet (see FIG. 1). That is, for example, the adhesive coating may be provided on the entire surface of one surface or both surfaces of the electrical steel sheet, or may be provided on one surface or both surfaces of the electrical steel sheet in a pattern such as a staggered arrangement (arrangement alternately shifted vertically and horizontally).

However, the adhesive coating is preferably provided in 60% or more, 80% or more, or 100% with respect to the area of one surface of the electrical steel sheet.

### [Vibrational Elastic Modulus]

In the adhesive coating, the vibrational elastic modulus at room temperature is 130 to 200 GPa. Note that room temperature refers to 25°C in the present disclosure.

When the vibrational elastic modulus at room temperature is less than 130 GPa, the adhesive strength of the adhesive coating at room temperature decreases.

When the vibrational elastic modulus at room temperature is more than 200 GPa, the magnetic properties of the adhesive surface-coated electrical steel sheet deteriorate.

Accordingly, the vibrational elastic modulus at room temperature is set within the above range. The vibrational elastic modulus at room temperature is preferably 140 GPa or more or 150 GPa or more, and more preferably 160 GPa or more. The vibrational elastic modulus at room temperature is preferably 190 GPa or less or 180 GPa or less.

The vibrational elastic modulus of the adhesive coating at 100°C is 100 to 200 GPa.

When the vibrational elastic modulus at 100°C is less than 100 GPa, the adhesive strength of the adhesive coating at high temperatures decreases.

When the vibrational elastic modulus at 100°C is more than 200 GPa, the magnetic properties of the adhesive surface-coated electrical steel sheet deteriorate.

Accordingly, the vibrational elastic modulus at 100°C is set within the above range. The vibrational elastic modulus at 100°C is preferably more than 100 GPa, 110 GPa or more or 120 GPa or more, and more preferably 140 GPa or more. The vibrational elastic modulus at 100°C is preferably 190 GPa or less, and more preferably 180 GPa or less.

The vibrational elastic modulus at room temperature and at 100°C can be adjusted by the types and mass ratio of the crosslinkable thermoplastic resin A and the thermoplastic resin B.

The vibrational elastic modulus at room temperature and at 100°C are measured by a free vibration resonance method. Specifically, the measurement is performed as follows.

From the adhesive surface-coated electrical steel sheet to be measured, two single-sheet test pieces of 60 mm × 10 mm are cut out. The two single-sheet test pieces are then superposed with their adhesive coatings facing each other to obtain a laminate. The laminate is heated and pressurized under the conditions of a steel sheet temperature of 250°C, a pressure of 3 MPa, and a heating and pressing time of 60 minutes, and thereafter cooled to room temperature (25°C).

From the cooled laminate, two test pieces bonded together by the adhesive coating are taken in a rectangular shape of the maximum possible length.

The vibrational elastic modulus at room temperature is obtained by measuring the Young's modulus of the collected test piece at room temperature (25°C) using a free vibration resonance method with a free vibration resonance measuring apparatus.

As the free vibration resonance measuring apparatus, for example, a JE2-RT type manufactured by Nihon Techno-Plus Co., Ltd. may be used. In the measurement of the Young's modulus, the test piece is placed on the fine wire of the sieve of the apparatus, and a driving force is applied in the direction perpendicular to the upper and lower surfaces of the test piece by an oscillator. Vibration is detected by a detector (microphone) installed in the vicinity of the test piece. The frequency of the oscillator is gradually changed, and while applying a driving force such that the test piece vibrates in response thereto, the output of the detector is observed. The Young's modulus is calculated from the resonant frequency of the test piece and its dimensions.

Further, the test piece collected as described above is heated to 100°C, and the vibrational elastic modulus at 100°C is obtained by measuring the Young's modulus of the test piece in the 100°C state using the above-described method.

In the above measurement method, the laminate obtained by superposing two single-sheet test pieces with their adhesive coatings facing each other was used. However, a laminate obtained by superposing a surface of one single-sheet test piece on which no adhesive coating is formed and a surface of the other single-sheet test piece on which the adhesive coating is formed may also be used.

### [Average Thickness of Adhesive Coating]

The average thickness of the adhesive coating is preferably 1.0 to 6.0 µm. The average thickness of the adhesive coating is more preferably 1.5 µm or more or 2.0 µm or more. Also, the average thickness of the adhesive coating is more preferably 4.0 µm or less or 3.0 µm or less.

The adhesive surface-coated electrical steel sheet according to the present disclosure is excellent in both the adhesive strength at room temperature and high temperature and the magnetic properties even when the average thickness of the adhesive coating is reduced to 1.0 to 6.0 µm.

The method for measuring the average thickness of the adhesive coating is as follows.

An adhesive surface-coated electrical steel sheet to be measured is cut along the thickness direction to obtain a test piece having a cut surface as an observed section.

The observed section of the test piece is observed with a scanning electron microscope (SEM), and the thickness of the adhesive coating is measured at arbitrary three positions. Then, the thicknesses of the adhesive coating at three positions are arithmetically averaged to obtain the average thickness of the adhesive coating. Note that the adhesive coating and the electrical steel sheet can be easily distinguished by a difference in luminance, and a layer present at the center in the sheet thickness direction is regarded as an electrical steel sheet, and layers present on the surface and the back side in the sheet thickness direction are regarded as adhesive coatings.

### [Components of Adhesive Coating]

The adhesive coating contains a crosslinkable thermoplastic resin A and a thermoplastic resin B other than the crosslinkable thermoplastic resin A.

The adhesive coating is an insulating coating in which at least the crosslinking of the crosslinkable thermoplastic resin A proceeds and the adhesive coating is cured by heating and pressurization to exhibit adhesive ability.

### - Crosslinkable thermoplastic resin A -

The crosslinkable thermoplastic resin A is a thermoplastic resin having a crosslinkable group.

The crosslinkable thermoplastic resin A is preferably a water-insoluble resin. The water-insoluble resin is a resin that is not dissolved in water or has low solubility in water. Specifically, the water-insoluble resin is a resin having a solubility in water at 25°C of 1 g or less per 100 g of water.

The crosslinkable thermoplastic resin A is preferably dispersed in the form of particles in an adhesive coating using the thermoplastic resin B as a matrix resin.

The adhesive coating may contain only one or two or more crosslinkable thermoplastic resins A.

In the crosslinkable thermoplastic resin A, the crosslinkable group may be a crosslinkable group capable of being crosslinked even in the absence of a crosslinking agent (that is, a self-crosslinkable group in which the crosslinkable groups react with each other to crosslink), or may be a crosslinkable group capable of being crosslinked by reacting with a crosslinking agent.

The crosslinkable group is preferably a group capable of exhibiting crosslinkability by heating.

Specific examples of the crosslinkable group include an N-methylol group, an N-butylol group, a glycidyl group, an alkoxymethylamide group, an alkoxysilyl group, a hydroxyl group, a phenolic hydroxyl group, a carboxyl group, a thiol group, and an amino group.

The crosslinkable thermoplastic resin A may be either a vinyl thermoplastic resin or a non-vinyl thermoplastic resin.

Examples of the non-vinyl thermoplastic resin include non-vinyl resins such as polyester resins, polyurethane resins, polyamide resins and phenoxy resins.

Examples of the vinyl thermoplastic resin include homopolymers of monomers such as styrene monomers (for example, styrene, parachlorostyrene, α-methylstyrene), (meth)acrylic acid monomers (for example, (meth)acrylic acid, (meth)acrylic acid alkyl ester), and olefin monomers (for example, ethylene, propylene, butadiene), or copolymers obtained by combining two or more of these monomers.

The "styrene monomer" refers to a monomer having a styrene skeleton (a structure in which one hydrogen atom of six hydrogen atoms of benzene is substituted with a vinyl group).

The "styrene resin" refers to a resin in which the proportion of the configurational unit derived from the styrene monomer is 50 mass% or more with respect to all the configurational units.

The "(meth)acrylic acid monomer" refers to a monomer having a (meth)acryloyl group.

The "(meth)acrylic acid monomer" refers to a resin in which the proportion of the configurational unit derived from the (meth)acrylic acid monomer is 50 mass% or more with respect to all the configurational units.

The "(meth)acrylic" is a term encompassing both "acrylic" and "methacrylic".

The "olefin monomer" refers to a monomer having an olefin skeleton composed of at least three carbon atoms and having a carbon-carbon double bond.

The "olefin monomer" refers to a resin in which the proportion of the configurational unit derived from the olefin monomer is 50 mass% or more with respect to all the configurational units.

Among them, from the viewpoint of improving the adhesive strength and the magnetic properties, the crosslinkable thermoplastic resin A is preferably one or more of a (meth)acrylic resin and a polyester resin.

### - Content of crosslinkable thermoplastic resin A -

The content of the crosslinkable thermoplastic resin A is preferably 70 mass% to 97 mass%, more preferably 75 mass% to 95 mass%, and still more preferably 80 mass% to 93 mass% with respect to the adhesive coating.

### - Thermoplastic resin B -

The thermoplastic resin B is a thermoplastic resin other than the crosslinkable thermoplastic resin A.

The thermoplastic resin B is preferably a water-soluble resin. Here, the water-soluble resin is a resin having a solubility in water at 25°C of 5 g or more per 100 g of water.

The adhesive coating may contain only one or two or more thermoplastic resins B.

The thermoplastic resin B may be either a vinyl thermoplastic resin or a non-vinyl thermoplastic resin.

Examples of the non-vinyl thermoplastic resin include the non-vinyl resins exemplified for the crosslinkable thermoplastic resin A.

Examples of the vinyl thermoplastic resin include the vinyl resins exemplified for the crosslinkable thermoplastic resin A.

Among them, from the viewpoint of improving the adhesive strength and the magnetic properties, the thermoplastic resin B is preferably one or more of a (meth)acrylic resin and a polyester resin.

Here, the thermoplastic resin B may be a crosslinkable thermoplastic resin or a non-crosslinkable thermoplastic resin, but is preferably a non-crosslinkable thermoplastic resin from the viewpoint of improving the magnetic properties.

Examples of the non-crosslinkable thermoplastic resin include those containing no crosslinkable group of the resins exemplified for the crosslinkable thermoplastic resin A.

### - Content of thermoplastic resin B -

The thermoplastic resin B is preferably contained in the adhesive coating in a predetermined amount with respect to the crosslinkable thermoplastic resin A. Specifically, the mass ratio of the crosslinkable thermoplastic resin A to the thermoplastic resin B (content of crosslinkable thermoplastic resin A/content of thermoplastic resin B) is preferably 97/3 to 70/30, more preferably 95/5 to 85/15, and further preferably 95/5 to 90/10.

When the mass ratio of the crosslinkable thermoplastic resin A to the thermoplastic resin B is 97/3 to 70/30, both the adhesive strength and the magnetic properties are more excellent.

### - Other components -

The adhesive coating may contain components other than the components described above (so-called other components) as necessary as long as the effects thereof are not impaired.

In particular, the adhesive coating may contain a crosslinking agent. The crosslinking agent is a particularly preferred component because it has a favorable influence on both the adhesive strength and the magnetic properties.

Examples of the crosslinking agent include thermosetting resins, and specific examples thereof include polymer crosslinking agents such as epoxy resins, phenol resins, and amino resins (melamine resin, guanamine resin, and the like), and low molecular crosslinking agents composed of monomers or oligomers such as isocyanate compounds, polyol compounds, epoxy compounds, phenol compounds, and amino compounds (melamine compound, guanamine compound, and the like).

The content of the crosslinking agent is preferably 1 to 20 mass%, and more preferably 1 to 10 mass% with respect to the adhesive coating.

The adhesive coating may contain only one or two or more crosslinking agents.

The components of the adhesive coating are identified by measuring the weight average molecular weight by GPC and further analyzing the functional groups by FT-IR.

The weight average molecular weight of the components of the adhesive coating is measured by GPC (Gel Permeation Chromatography). The components of the adhesive coating are identified from the molecular weight distribution obtained by GPC.

Measurement conditions are as follows.
Measurement device: high-speed GPC (HLC-8220GPC, manufactured by Tosoh Corporation)
Detector: differential refractive index detector (RI) (incorporated in HLC-8220, manufactured by Tosoh Corporation)
Column: four columns of TSK-gel GMHXL (manufactured by Tosoh Corporation)
Column temperature: 40°C
Eluent: tetrahydrofuran
Injection amount of sample solution: 100 µL
Flow rate: 0.8 mL/min

The functional groups of the components of the adhesive coating are analyzed by FT-IR (Fourier transform infrared spectrometer). The obtained spectrum is converted into a form similar to a normal absorbance spectrum by Kramers-Kronig analysis. The functional groups are identified from the obtained absorbance spectrum.

Measurement conditions are as follows.
Measurement device: Spotlight 400 (manufactured by Perkin Elmer)
Measurement method: specular reflection method (background: gold plating)
Resolution: 2 cm⁻¹
Scan: 16 times

For example, when a (meth)acrylic resin is contained as the crosslinkable thermoplastic resin A as the component of the adhesive coating, the crosslinkable thermoplastic resin A has a weight average molecular weight of 80,000 to 300,000, and an N-methylol group, a glycidyl group, a carboxyl group, or an amino group is detected.

When a polyester resin is contained as the crosslinkable thermoplastic resin A, the crosslinkable thermoplastic resin A has a weight average molecular weight of 30,000 to 120,000, and a hydroxyl group or a carboxyl group is detected.

When a resin having high solubility in water is included as the thermoplastic resin B, a weight average molecular weight becomes to approximately 10,000 to 50,000, and functional groups such as carboxyl groups and hydroxyl groups are detected

### (Method for manufacturing adhesive surface-coated electrical steel sheet)

### (Method for forming adhesive coating)

The adhesive coating is formed by applying a coating liquid for forming an adhesive coating (hereinafter also referred to as "the coating liquid of the present disclosure") to at least a part of one surface or both surfaces of the electrical steel sheet and drying the coating film.

In the present disclosure, when a plurality of substances corresponding to each component are present in the coating liquid for forming an adhesive coating, the amount of each component in the coating liquid for forming an adhesive coating means the total amount of the plurality of substances present in the coating liquid for forming an adhesive coating unless otherwise specified.

The coating liquid of the present disclosure contains, for example, particles of a crosslinkable thermoplastic resin A (hereinafter also referred to as "crosslinkable thermoplastic resin particles A"), a thermoplastic resin B, and a medium containing water.

In the coating liquid of the present disclosure, the crosslinkable thermoplastic resin particles A are present in a state of being dispersed in the medium containing water.

Also, the thermoplastic resin B is present in a state of being dissolved in the medium containing water.

The coating liquid has a mass ratio of the crosslinkable thermoplastic resin A to the thermoplastic resin B of 97/3 to 70/30. By using a coating liquid containing the crosslinkable thermoplastic resin A and the thermoplastic resin B at this mass ratio, the above-described adhesive coating can be formed.

Here, the type of water is not particularly limited.

As the water, for example, distilled water, deionized water (also referred to as "ion-exchanged water"), and pure water are preferable from the viewpoint of a small amount of impurities.

The content of water is preferably 35 to 50 mass% and more preferably 40 to 45 mass% with respect to the total mass of the coating liquid.

The coating liquid of the present disclosure may contain components other than the components described above (so-called other components) as necessary as long as the effects thereof are not impaired.

Examples of other components include an aqueous medium other than water.

Examples of the aqueous medium other than water include a water-miscible organic solvent.

Examples of the water-miscible organic solvent include organic solvents such as monohydric alcohol compounds such as methanol and ethanol; polyhydric alcohol compounds such as glycerin, ethylene glycol, and propylene glycol; and glycol derivatives such as ethylene glycol monoethyl ether and propylene glycol monobutyl ether.

Examples of other components include various additives such as a chain preservative, a wetting agent, and an antifoaming agent.

The coating liquid of the present disclosure is obtained, for example, by mixing a dispersion liquid in which the crosslinkable thermoplastic resin particles A are dispersed in water with an aqueous solution of the thermoplastic resin B.

Examples of the mixing method include a method of mixing by stirring.

For the stirring, a general stirring instrument or a stirring device can be used.

The stirring temperature is not particularly limited, but is preferably, for example, 20°C to 30°C.

Examples of the method for forming the adhesive coating by the coating liquid of the present disclosure include a method in which the coating liquid is applied to the surface of the electrical steel sheet by a well-known coating method such as a roll coater method or a spray method, and then the coating film is dried.

The solid content concentration of the coating liquid is preferably 5 to 40 mass%, and more preferably 10 to 25 mass%.

The drying temperature is preferably 100°C to 200°C, and the drying time is preferably 10 to 90 seconds.

The drying method is preferably a method using a heating furnace of a copying method, but may be a hot air furnace method or other methods.

### (Laminated core)

In the laminated core of the present disclosure, a plurality of the adhesive surface-coated electrical steel sheets of the present disclosure are stacked, and the electrical steel sheets are bonded to each other by a cured film of the adhesive coating.

Here, the cured film of the adhesive coating is a film in which the laminated adhesive surface-coated electrical steel sheets are heated and pressurized, whereby the crosslinking of the crosslinkable thermoplastic resin A in the adhesive coating proceeds and the adhesive coating is cured to exhibit adhesive ability.

The presence or absence of curing of the adhesive coating can be determined by the following method.

Two single sheet test pieces having a size of 30 mm × 60 mm are cut out from the adhesive surface-coated electrical steel sheet. The end portions of 30 mm × 10 mm in the two single sheet test pieces are overlapped with their adhesive coatings facing each other. The overlapped body is heated and pressurized under conditions of a steel sheet temperature of 250°C, a pressurizing force of 2 MPa, and a heating and pressurizing time of 1 minute to obtain a sample for measuring adhesive strength.

The tensile shear adhesive strength is measured at a steel sheet temperature of room temperature (25°C). The sample for measuring adhesive strength is attached to a tension tester, and the tensile shear adhesive strength is measured at a tensile speed of 50 mm/min.

A value obtained by dividing the obtained value of the tensile shear adhesive strength by the adhesive area of the two single sheet test pieces is determined as room-temperature adhesive strength.

When the room-temperature adhesive strength is more than 4.5 MPa, it can be determined that the adhesive coating has sufficient adhesive strength at room temperature, and it can be determined that the adhesive coating is cured.

Specifically, examples of the laminated core of the present disclosure include a laminated core integrated by punching the adhesive surface-coated electrical steel sheet of the present disclosure to produce blanking members, stacking the blanking members, and heating and pressurizing the laminated members.

FIG. 2 is a schematic view illustrating an example of a laminated core of the present disclosure. As illustrated in FIG. 2, a laminated core 100 (stator 100) is formed as a laminated body 13 in which eight blanking members 11 of the adhesive surface-coated electrical steel sheet are annularly connected, and the annularly connected blanking members 11 are stacked in eight layers and integrated.

The blanking member 11 of the adhesive surface-coated electrical steel sheet is formed by punching the adhesive surface-coated electrical steel sheet, and includes a yoke portion 17 on an arc and a tooth portion 15 protruding radially inward from an inner circumferential surface of the yoke portion 17.

The laminated core 100 is not limited to the shape, the number, the number of laminated layers, and the like of the blanking members 11 forming the laminated core 100 illustrated in FIG. 2, and may be designed according to the object.

### (Method for manufacturing laminated core)

The laminated core of the present disclosure is manufactured, for example, by the following method.

First, the adhesive surface-coated electrical steel sheets of the present disclosure are stacked with an adhesive coating interposed between the electrical steel sheets.

The laminated body of the adhesive surface-coated electrical steel sheets is heated and pressurized to induce crosslinking of the crosslinkable thermoplastic resin A in the adhesive coating and cure the adhesive coating. As a result, the cured film of the adhesive coating exhibits adhesive ability, and the electrical steel sheets are adhered to each other by the cured film of the adhesive coating.

Through these operations, the laminated core of the present disclosure is obtained.

In the adhesive surface-coated electrical steel sheets, the cured films of the adhesive coatings of the electrical steel sheets may be adhered facing each other, or the cured film of the adhesive coating of one electrical steel sheet and the surface of the other electrical steel sheet on which the adhesive coating is not formed may be adhered facing each other.

The heating temperature is preferably 200°C to 300°C, the pressurizing force is preferably 0.5 to 10 MPa, and the heating and pressurizing time is preferably 30 to 60 minutes.

### (Application of laminated core)

The laminated core of the present disclosure can be used for a core (that is, core) used in a rotary electric machine or the like.

### Examples

Hereinafter, the coating liquid of the present disclosure will be described still more specifically with reference to Examples. The present disclosure is not limited to the following examples unless it exceeds the gist thereof.

### [Examples 1 to 8, Comparative Examples 1 to 7]

### 1. Manufacture of coating liquid

An aqueous dispersion liquid of crosslinkable thermoplastic resin particles A, an aqueous solution of a thermoplastic resin B and a crosslinking agent in the types and amounts (parts by mass) shown in Tables 1A and 1B were mixed to prepare coating liquids having a solid content concentration of 40 mass%.

However, the amounts (parts by mass) of the crosslinkable thermoplastic resin particles A, the thermoplastic resin B and the crosslinking agent in the coating liquids were as shown in Tables 1A and 1B. Blanks in the table indicate that a material corresponding to the column is not used. Also, underlined figures in the table indicate that they are outside the scope of the present disclosure.

The "solid content concentration" refers to the total mass ratio of the crosslinkable thermoplastic resin particles A, the aqueous solution of the thermoplastic resin B and the crosslinking agent in the coating liquid.

In Examples 1 to 4 and 8 and Comparative Examples 3 and 4, coating liquids containing no crosslinking agent were obtained.

In Comparative Example 1, a coating liquid containing no thermoplastic resin B was obtained.

In Comparative Example 5, a coating liquid containing no crosslinkable thermoplastic resin particles A and no crosslinking agent was obtained.

In Comparative Example 6, a coating liquid containing no thermoplastic resin B and no crosslinking agent was obtained.

In Comparative Example 7, a coating liquid containing no crosslinkable thermoplastic resin particles A was obtained.

### 2. Production of adhesive surface-coated electrical steel sheet

First, a non-oriented electrical steel sheet was prepared, which contained, by mass%, Si: 3.0%, Mn: 0.2%, Al: 0.5%, the balance being Fe and impurities and had a thickness of 0.25 mm and a width of 100 mm.

Next, the obtained coating liquid was applied to the entire surface of one surface of the electrical steel sheets, and then heated at the drying temperature and the drying time shown in Tables 1A and 1B to dry the coating films, thereby forming adhesive coatings having the average thickness shown in Tables 1A and 1B.

In this way, adhesive surface-coated electrical steel sheets were obtained.

### [Evaluation]

### (Vibrational Elastic Modulus)

The vibrational elastic modulus at room temperature (25°C) and at 100°C of the adhesive coating in the adhesive surface-coated electrical steel sheet of each example were measured according to the methods described above.

### (Adhesive strength)

Two single sheet test pieces having a size of 30 mm × 60 mm were cut out from the adhesive surface-coated electrical steel sheet of each example. The end portions of 30 mm × 10 mm in the two single sheet test pieces were overlapped with their adhesive coatings facing each other. The overlapped body was heated and pressurized under conditions of a steel sheet temperature of 250°C, a pressurizing force of 2 MPa, and a heating and pressurizing time of 1 minute to obtain a sample for measuring adhesive strength.

The tensile shear adhesive strength was measured as follows at a steel sheet temperature of room temperature (25°C). The sample for measuring adhesive strength was attached to a tension tester, and the tensile shear adhesive strength was measured at a tensile speed of 50 mm/min.

A value obtained by dividing the obtained value of the tensile shear adhesive strength by the adhesive area of the two single sheet test pieces was determined as room-temperature adhesive strength.

In addition, the sample for measuring adhesive strength was placed in an atmosphere at 150°C, and the tensile shear adhesive strength was measured by the same method as described above at a steel sheet temperature of 150°C.

A value obtained by dividing the obtained value of the tensile shear adhesive strength by the adhesive area of the two single sheet test pieces was determined as 150°C adhesive strength.

When the room-temperature adhesive strength was more than 4.5 MPa and the 150°C adhesive strength was more than 0.5 MPa, the sample was determined to be excellent in adhesive strength at room temperature and high temperature, and was determined to be acceptable. On the other hand, when either of them was not satisfied, the sample was determined to have poor adhesive strength at room temperature and high temperature, and was determined to be unacceptable.

### (Magnetic properties)

A single sheet test piece having a size of 55 mm × 55 mm was cut out from the adhesive surface-coated electrical steel sheet of each example. Then, the two single sheet test pieces were overlapped with their adhesive coatings facing each other. The overlapped body was heated and pressurized under conditions of a steel sheet temperature of 250°C, a pressurizing force of 2 MPa, and a heating and pressurizing time of 1 minute to obtain a laminated body sample.

The iron loss in the obtained laminated sample in the rolling direction and the orthogonal-to-rolling direction was measured by a single sheet magnetic measurement method defined in JIS C2556:2015, and the average value of the iron loss in the rolling direction and the orthogonal-to-rolling direction was determined.

When the average value of the iron loss obtained was 12.0 W/kg or less, the sample was determined to have excellent magnetic properties, and was determined to be acceptable. On the other hand, when the average value of the iron loss obtained was more than 12.0 W/kg, the sample was determined not to have excellent magnetic properties, and was determined to be unacceptable.

### (External appearance)

Three 5 mm square test pieces were cut out from the adhesive surface-coated electrical steel sheet of each example to obtain test pieces.

The surface of the adhesive coating of each test piece was observed at three positions with a scanning electron microscope at a magnification of 100 times. The observed visual field was nine visual fields in total.

Then, evaluation was performed according to the following evaluation criteria, and S and A were regarded as acceptable.
S: Coating defects such as cracks, crazing, and peeling were not observed at all
A: Area fraction of coating defects was 10% or less
B: Area fraction of coating defects was more than 10% and less than 30%
C: Area fraction of coating defects was 30% or more

Details of the used materials described in Table 1 are as follows.

### <Crosslinkable thermoplastic resin A>

Crosslinkable acrylic resin (1): crosslinkable group = N-methylol group, weight average molecular weight = 180,000
Crosslinkable acrylic resin (2): crosslinkable group = glycidyl group, weight average molecular weight = 150,000
Crosslinkable acrylic resin (3): crosslinkable group = carboxyl group, weight average molecular weight = 300,000
Crosslinkable acrylic resin (4): crosslinkable group = amino group, weight average molecular weight = 80,000
Crosslinkable polyester resin (5): crosslinkable group = hydroxyl group, weight average molecular weight = 30,000
Crosslinkable polyester resin (6): crosslinkable group = carboxyl group, weight average molecular weight = 120,000

### <Thermoplastic resin B>

Acrylic resin: weight average molecular weight = 50,000
Polyester resin: weight average molecular weight = 160,000
Polyurethane resin: weight average molecular weight = 20,000
Phenoxy resin: weight average molecular weight = 100,000

### <Crosslinking agent>

Epoxy resin: bisphenol A type, weight average molecular weight = 1,000 to 4,000
Phenol resin: novolac type, weight average molecular weight = 3,000 to 5,000
Amino resin: methylated benzoguanamine, weight average molecular weight = 5,000 to 8,000

**[Table 1A]**

| | | Example 1 | Example 2 | Example 3 | Example 4 | Example 5 | Example 6 | Example 7 | Example 8 |
|---|---|---|---|---|---|---|---|---|---|
| Vibrational elastic modulus (GPa) | Room temperature | 163 | 166 | 162 | 158 | 155 | 157 | 163 | 165 |
| | 100°C | 160 | 161 | 157 | 140 | 144 | 138 | 133 | 151 |
| Crosslinkable thermoplastic resin particle A | Crosslinkable acrylic resin (1) | 80 | | | | | | 70 | 92 |
| | Crosslinkable acrylic resin (2) | | 90 | | | | | | |
| | Crosslinkable acrylic resin (3) | | | 70 | | | | | |
| | Crosslinkable acrylic resin (4) | | | | 70 | | | | |
| | Crosslinkable polyester resin (5) | | | | | 70 | | | |
| | Crosslinkable polyester resin (6) | | | | | | 70 | | |
| Thermoplastic resin B | Acrylic resin | 20 | | 30 | | | | | |
| | Polyester resin | | | | | 20 | 20 | | 8 |
| | Polyurethane resin | | | | 30 | | | | |
| | Phenoxy resin | | 10 | | | | | 25 | |
| Crosslinking agent | Epoxy resin | | | | | 10 | 10 | | |
| | Phenol resin | | | | | | | | |
| | Amino resin | | | | | | | 5 | |
| Mass ratio of A:B | - | 80:20 | 90:10 | 70:30 | 70:30 | 70:20 | 70:20 | 70:25 | 92 : 8 |
| Drying temperature | °C | 170 | 150 | 170 | 170 | 140 | 140 | 150 | 150 |
| Drying time | sec | 90 | 60 | 90 | 90 | 60 | 60 | 60 | 60 |
| Average thickness of adhesive coating | µm | 2.0 | 1.5 | 2.2 | 1.8 | 2.5 | 2.5 | 3.1 | 1.9 |

**[Table 1B]**

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Vibrational elastic modulus (GPa) | Room temperature | 100 | 230 | 212 | 120 | 230 | 204 | 215 |
| | 100°C | 60 | 170 | 185 | 90 | 75 | 180 | 210 |
| Crosslinkable thermoplastic resin particle A | Crosslinkable acrylic resin (1) | | | | | | 100 | |
| | Crosslinkable acrylic resin (2) | 50 | 40 | | | | | |
| | Crosslinkable acrylic resin (3) | | 5 | 10 | | | | |
| | Crosslinkable acrylic resin (4) | | | | 40 | | | |
| | Crosslinkable polyester resin (5) | | | | | | | |
| | Crosslinkable polyester resin (6) | | | | | | | |
| Thermoplastic resin B | Acrylic resin | | 25 | 90 | | 100 | | 20 |
| | Polyester resin | | | | | | | |
| | Polyurethane resin | | | | 5 | | | |
| | Phenoxy resin | | | | 55 | | | |
| Crosslinking agent | Epoxy resin | 40 | | | | | | 75 |
| | Phenol resin | 10 | | | | | | 5 |
| | Amino resin | | 55 | | | | | |
| Mass ratio of A: B | - | - | 45:25 | 10:90 | 40:55 | - | - | - |
| Drying temperature | °C | 150 | 150 | 170 | 170 | 150 | 170 | 150 |
| Drying time | sec | 60 | 60 | 90 | 90 | 60 | 90 | 75 |
| Average thickness of adhesive coating | µm | 2.0 | 2.2 | 3.1 | 1.4 | 2.1 | 3.1 | 8.0 |

**[Table 2]**

| | External appearance | Adhesive strength (MPa) | | Iron loss (W/kg) |
|---|---|---|---|---|
| | | Room temperature | 150°C | W10/400 |
| Example 1 | A | 10.0 | 3.5 | 10.5 |
| Example 2 | S | 9.7 | 3.0 | 10.2 |
| Example 3 | A | 12.3 | 4.4 | 10.9 |
| Example 4 | A | 11.8 | 4.3 | 10.7 |
| Example 5 | A | 13.2 | 4.5 | 10.8 |
| Example 6 | A | 10.3 | 3.5 | 9.9 |
| Example 7 | A | 14.3 | 3.1 | 10.6 |
| Example 8 | A | 7.5 | 2.8 | 9.9 |
| Comparative Example 1 | A | 4.5 | 1.4 | 10.2 |
| Comparative Example 2 | A | 15.3 | 5.8 | 12.6 |
| Comparative Example 3 | B | 12.6 | 4.3 | 12.4 |
| Comparative Example 4 | B | 4.2 | 0.3 | 10.3 |
| Comparative Example 5 | B | 13.5 | 1.1 | 13.1 |
| Comparative Example 6 | C | 10.3 | 3.3 | 12.9 |
| Comparative Example 7 | A | 14.5 | 4.6 | 13.3 |

From the above results, it is found that the present examples are excellent in adhesive strength at room temperature and high temperature and magnetic properties as compared with the comparative examples.

### INDUSTRIAL APPLICABILITY

According to the present disclosure, it is possible to provide an adhesive surface-coated electrical steel sheet which is excellent in both the adhesive strength at room temperature and high temperature and the magnetic properties, a laminated core using the same, and a method for manufacturing the same.

### REFERENCE SIGNS LIST

10 Adhesive surface-coated electrical steel sheet
10A Electrical steel sheet
10B Adhesive coating
10C Adhesive coating
11 Blanking member of adhesive surface-coated electrical steel sheet
100 Laminated core

## Claims

1. An adhesive surface-coated electrical steel sheet, comprising:
an electrical steel sheet; and
an adhesive coating provided on at least a part of one surface or both surfaces of the electrical steel sheet,
wherein the adhesive coating
contains a crosslinkable thermoplastic resin A and a thermoplastic resin B other than the crosslinkable thermoplastic resin A, and
has a vibrational elastic modulus at room temperature of 130 to 200 GPa, and the vibrational elastic modulus at 100°C of 100 to 200 GPa.

2. The adhesive surface-coated electrical steel sheet according to claim 1,
wherein the crosslinkable thermoplastic resin A is one or more of a (meth)acrylic resin and a polyester resin.

3. The adhesive surface-coated electrical steel sheet according to claim 1,
wherein a mass ratio of the crosslinkable thermoplastic resin A to the thermoplastic resin B is 97/3 to 70/30.

4. The adhesive surface-coated electrical steel sheet according to claim 1,
wherein the adhesive coating is cured.

5. A laminated core wherein a plurality of the adhesive surface-coated electrical steel sheets according to any one of claims 1 to 4 are stacked and the electrical steel sheets are adhered to each other by a cured film of the adhesive coating.

6. A method for manufacturing the adhesive surface-coated electrical steel sheet according to any one of claims 1 to 4, the method comprising:
forming a coating film by applying a coating liquid containing particles of the crosslinkable thermoplastic resin A and the thermoplastic resin B other than the crosslinkable thermoplastic resin A and having a mass ratio of the crosslinkable thermoplastic resin A to the thermoplastic resin B of 97/3 to 70/30 to at least a part of one surface of both surfaces of the electrical steel sheet; and
drying the coating film to form the adhesive coating.

7. A method for manufacturing the laminated core according to claim 5, the method comprising:
stacking the adhesive surface-coated electrical steel sheets with the adhesive coating interposed between the electrical steel sheets to form a laminated body; and
curing the adhesive coating by heating and pressurizing the laminated body to form the cured film.
